# EUROPEAN PATENT APPLICATION

(11) **EP 4 525 257 A1**
(43) Date of publication of application: **19.03.2025**
(21) Application number: 23197142.5
(22) Date of filing: 13.09.2023
(51) Int. Cl.: H02J 7/00, H02J 7/36

(54) **SELECTIVELY ACTIVATED PROTECTION AND BYPASS CIRCUIT IN ENERGY STORAGE SYSTEMS**

(71) Applicant: Hitachi Energy Ltd, 8050 Zürich (CH)
(72) Inventor: Viatkin, Aleksandr, 72338 Västerås (SE); Bai, Haofeng, 723 48 Västerås (SE); Chou, Shih-Feng, 72342 Västerås (SE)
(74) Representative: AWA Sweden AB

(57) **Abstract**

The present disclosure relates to a bypass circuit (1) for an energy storage system, ESS. The bypass circuit is configured to form a half-bridge circuit with a first connection terminal (CT1) between a first half-bridge circuit assembly portion (HB-A) and the second half-bridge circuit assembly portion (HB-B) and a second connection terminal (CT2) between the second half-bridge circuit assembly portion (HB-B) and said one energy storage module (EM1, EMm), wherein the first half-bridge circuit assembly portion (HB-A) includes a first branch (HB-A1) and a second branch (HB-A2), and the second half-bridge circuit assembly portion (HB-B) includes a third and a fourth branch (HB-B3, HB-B4), and the bypass circuit (1) further comprises: a first switch (sw1) arranged in the first branch (HB-A1), a second switch (sw2) arranged in the third branch (HB-B3), a first diode (D1) arranged in the second branch (HB-A2) and configured to be forward-biased in a circuit direction from the first connection terminal (CT1) to said one energy storage module (EM1, EMm), a second diode (D2) arranged in the fourth branch (HB-B4) and configured to be forward-biased in a circuit direction from the second connection terminal (CT2) to the first connection terminal (CT1), a third switch (sw3) arranged in the fourth branch (HB-B4) or arranged in series with both the third and fourth branches (HB-B3, HB-B4). An ESS and a control unit and a method are also disclosed.

## Description

### Technical Field

The invention relates to a method of controlling operation of an energy storage system, ESS, and in particular a method of controlling operation of an ESS upon fault detection. The invention also relates to a control unit for carrying out said method and an ESS incorporating said control unit.

### Background

An energy storage system, ESS, comprises energy storage devices (e.g., batteries) for storing energy to be released when needed at a later time. The energy storage devices are typically arranged in configurations of series- and/or parallel connected circuits. An ESS may also incorporate fail-safe solutions for handling a fault in the ESS to mitigate performance loss and/or prevent damage of an affected component. Depending on application, fail-safe solutions may involve protecting and/or bypassing the affected component.

US2013049472 AA discloses an ESS configuration including a battery stack that consists of a plurality of series-connected battery units, thereby forming a plurality of branches of battery units. Each battery unit of each battery unit branch is composed of a plurality of parallel-connected battery cells. Moreover, each battery unit comprises a bypassing switch for each battery cell, thereby allowing each battery cell to be bypassed when affected by a fault. Each battery unit also comprises individual protection devices for each battery cell.

A main drawback of this ESS configuration is that some faults require a complete interruption of a battery unit branch before closing a bypass circuit. This typically results in the ESS being oversized to keep up with any eventual power/energy losses due to a short-term battery unit branch disconnection. A further drawback is that some faults require an intentional short-circuiting of a battery unit before individual protective devices can be controlled to disconnect parallel-connected battery cells from the circuit. This typically results in battery units being designed to allow short-term short-circuiting. These drawbacks thus result in both the battery units and the bypassing/protective circuits becoming subjected to significant stresses following overcurrent and/or overvoltage.

Bypassing/protective circuits of current ESS solutions are preferably designed to e.g., withstand initial peaks of short-circuit currents, and to withstand significant circulating currents due to mismatching between open circuit voltages of parallel branches/devices. Moreover, the ESS bypass circuit design is preferably capable of dealing with highly hazardous inter-branch or system level faults that are typically accompanied by an enormous release of energy causing fires, explosions etc. Therefore, it is extremely important to localize and isolate a fault as fast as possible to stop propagation to adjacent energy storage devices.

In view of the above, it is of interest to provide a solution which alleviates at least some of the problems of current ESS solutions.

### Summary

It is an object of the present invention to provide an improved solution that alleviates at least some of the mentioned drawbacks with present solutions. A first object of the invention is to provide a bypass circuit with increased functionality over current solutions. This object is solved by the bypass circuit according to claim 1. A second object of the invention is to provide an ESS incorporating said bypass circuit. The second object is solved by claim 10. A third object is to provide a method of controlling an ESS in the event of a fault. The third object is solved by the method of claim 11. A fourth object is to provide a control unit for controlling operation of an ESS. The fourth object is solved by the invention of claim 15. Moreover, one aim is to provide a bypass circuit for improving handling of short-circuits and voltage stresses which may arise as a consequence of a fault, or as a consequence of bypassing and/or disconnecting an energy storage module. Various embodiments improve in either or both of these regards. Further advantageous embodiments are set out in the dependent claims or discussed in the following.

According to a first aspect of the invention, a bypass circuit for an energy storage system, ESS, is provided. The ESS comprises: a converter providing a DC converter voltage between a first connection terminal and a second converter connection terminal, and one or more strings connected between the first converter connection terminal and the second converter connection terminal, each string comprising at least one energy storage module. The bypass circuit comprises: a half-bridge circuit assembly comprising a first half-bridge circuit assembly portion and a second half-bridge circuit assembly portion. The half-bridge circuit assembly is configured to connect with one energy storage module of said at least one energy storage module to form a half-bridge circuit with a first connection terminal between the first half-bridge circuit assembly portion and the second half-bridge circuit assembly portion and a second connection terminal between the second half-bridge circuit assembly portion and said one energy storage module. The first half-bridge circuit assembly portion includes a first branch and a second branch, and the second half-bridge circuit assembly portion includes a third branch and a fourth branch. The bypass circuit further comprises: a first switch arranged in the first branch; a second switch arranged in the third branch; a first diode arranged in the second branch and configured to be forward-biased in a circuit direction from the first connection terminal to said one energy storage module; a second diode arranged in the fourth branch and configured to be forward-biased in a circuit direction from the second connection terminal to the first connection terminal; a third switch arranged in the fourth branch or a third switch arranged in series with both the third and fourth branches.

By incorporating a third switch in either the fourth branch or in series with both the third and fourth branches, the bypass circuit may advantageously provide increased functionality in terms of operation in response to a fault. As an example, the third switch allows for disconnecting a current path between the first connection terminal and the second connection terminal via the third branch and the fourth branch. This may be advantageous when operating the other switches of the bypass circuit to bypass or to disconnect the at least one energy storage module. As another example, it may also be used for handling external open-circuit faults in a string when the third switch is in an open position. In particular, the third switch may prevent current flow through the second diode in some fault scenarios or block the fault voltage across the switch terminals rather than the voltage being continuously applied at the location of the fault.

Moreover, the bypass circuit according to the invention facilitates enabling safe and uninterruptable operation of the ESS. For instance, a bypass circuit as herein proposed may alleviate problems associated with disconnecting a string, such as any possible short-circuits or voltage stresses, and/or may alleviate problems associated with bypassing an energy storage module, such as mismatch in open circuit DC voltage mismatch between strings of an ESS. This may be achieved since the bypass circuit may allow for disconnecting and/or bypassing a failed module or failed modules (or associated circuit portions thereof), while maintaining continuous current flow in the rest, unaffected part of the ESS circuit.

Additionally, the bypass circuit may, in combination with large number of parallel connected energy storage modules in a string segment, potentially reduce the manufacturing and maintenance costs in comparison with an ESS where strings are purely composed by series connected modules. This feature may arise from the fact that for the same energy capacity of ESS, it may require fewer bypassing circuits. The bypass circuit may also be relatively simple in design and may allow for scalability of the ESS depending on application, thereby allowing for great flexibility in ESS design.

Said ESS may comprise a plurality of strings. A first plurality of strings may comprise a plurality of string segments connected in series. Each segment comprises at least one energy storage module. One or more string segments in the first plurality of strings may comprise two or more energy storage modules, which may be connected in series, or connected in parallel, or according to a connection scheme including both series connected and parallel connected energy storage modules. Energy storage modules in one or more string segments may be arranged in a mix configuration comprising parallel connected energy storage modules and series connected energy storage modules. Said ESS may comprise a second plurality having a partially similar and/or different arrangement of string segments.

By open circuit DC voltage, it may be meant a DC voltage between a first connection terminal of a string and a second connection terminal of said string. The open circuit DC voltage may be dependent on energy stored in each energy storage segment.

According to one embodiment, the bypass circuit comprises a fourth switch arranged in the second branch or arranged in series with both the first branch and the second branch. By arranging a fourth switch in this manner, the advantages associated with the third switch may also be achieved for a current flow direction from the second connection terminal to the first connection terminal.

According to one embodiment, the bypass circuit further comprises a third diode arranged in the third branch and is configured to be forward-biased from said first connection terminal to the second connection terminal, wherein the second switch and the third diode are connected in series and the third switch and the second diode are connected in series. By incorporating the third diode in the third branch, it may substantially prevent current flow in a direction from the second connection terminal to the first connection terminal while allow current flow in the opposite direction once the second switch is in a closed position, i.e., the at least one energy storage module is being bypassed. By this bypass circuit, a current may be routed through the circuit in an advantageous manner for the purpose of charging, discharging, or bypassing at least one battery module, while the first, second, and third diode may promote prevention of fault current flow in the event of a fault.

According to one embodiment, the bypass circuit further comprises a fourth switch arranged in the second branch and a fourth diode arranged in the first branch and configured to be forward-biased in a circuit direction from said one energy storage module to the first connection terminal, wherein the first switch and the fourth diode are connected in series and the fourth switch and the first diode are connected in series. By incorporating the fourth diode in the first branch, it may substantially prevent current flow in a direction from the first connection terminal towards the at least one energy storage module but allow current flow in the opposite direction, which may occur when the first switch is closed. The first switch may be closed for the purpose of conducting current in a negative flow direction, from the second connection terminal to the first connection terminal.

According to one embodiment, the bypass circuit further comprises a third diode arranged in the third branch and is configured to be forward-biased from said first connection terminal to the second connection terminal, wherein the second switch and the third diode are connected in series and the third switch and the second diode are connected in series. Moreover, the bypass circuit further comprises a fourth switch arranged in the second branch and a fourth diode arranged in the first branch and configured to be forward-biased in a circuit direction from said one energy storage module to the first connection terminal, wherein the first switch and the fourth diode are connected in series and the fourth switch and the first diode are connected in series. By this bypass circuit, it may alleviate problems associated with string disconnection and voltage mismatching following bypassing of the at least one energy storage module. Moreover, the bypass circuit allows for the switches to be coordinated in operation to allow for handling currents with indefinite direction. An indefinite current may be defined as a current which alternates in flow direction. This may occur more often the smaller the current is in terms of magnitude.

According to one embodiment, the bypass circuit further comprises a first protection switch for individually disconnecting a first energy storage module, and optionally at least a second protection switch for individually disconnecting each of an at least second energy storage module. By this, the first energy storage module may be individually disconnected from a plurality of energy storage modules. Optionally, an at least second energy storage module may be disconnected from a plurality of energy storage modules. At least a second protection switch may include 2, 3, 4, 5, 6, 7, 8, 9, 10 or more protection switches for a corresponding number of energy storage modules connected in parallel. Hence, incorporating these additional switches may further increase functionality of the bypass circuit. Alternatively, the bypass circuit may connect with one or more energy storage modules associated with a respective protection switch.

According to one embodiment, one or more of the first, second, third switches or any other switch in the bypass circuit is a resettable switch or a non-resettable switch. Said resettable switch may for example include any of: a magnetic contactor, a mechanically operated switch, power electronic devices (e.g., IGBT, MOSFET, etc.), solid state switches, etc. Said resettable switch may include other switches as well. Alternatively, one or more of the first, second, third switches sw1, sw2, sw3 or any other switch in the bypass circuit may be a non-resettable switch. By other switch, it may be meant the fourth switch or any of protection switches if included. Said non-resettable switch may include any of: pyro switch, a fuse, etc. Non-resettable switches may include other switches as well. Said switch or switches may be designed respectively for its intended position in the bypass circuit.

According to one embodiment, one or more of the first, second, third diode or any other diode in the bypass circuit is a single diode or a multi-diode stack. Said diode or diodes may be designed respectively for its intended position in the bypass circuit. Any other diode in the bypass circuit may include the fourth diode and/or any other diodes in the bypass circuit.

According to one embodiment, the bypass circuit is adapted to be at least partially or wholly integrated with an energy storage module. By integrated with an energy storage module, it may include integrated with a single energy storage module, or integrated with a plurality of energy storage modules. It may include being integrated with a string segment.

According to one embodiment, the bypass circuit comprises a first half-bridge circuit assembly and a second half-bridge circuit assembly which together form a full-bridge circuit assembly. This may further increase functionality of the bypass circuit.

According to a second aspect of the invention, an energy storage system, ESS, is provided. The ESS comprises: a converter providing a DC converter voltage between a first converter connection terminal and a second converter connection terminal; one or more strings connected between the first converter connection terminal and the second converter connection terminal, each string comprising at least one energy storage module; and a bypass circuit according to the first aspect or any embodiments thereof and connected to at least one of said at least one energy storage module. By such an ESS with a bypass circuit connected to at least one of said at least one energy storage module, the ESS may continue operation with limited reduction in performance even if the bypass circuit disconnects or bypasses an energy storage module. Moreover, the ESS may include a plurality of bypass circuits to connect to a plurality of energy storage module, which may be arranged in various configurations in string segments in strings. The ESS may be advantageously adapted so that all energy storage modules may be disconnected and/or bypassed by means of a bypass circuit according to the first aspect or any embodiments thereof.

According to a third aspect of the invention, a method of controlling operation of an energy storage system, ESS, is provided. The method comprises: upon detection of a fault affecting a first string, controlling operation of at least one bypass circuit to bypass or disconnect at least one energy storage module. The method may include controlling operation of one or more bypass circuits to disconnect or bypass one or more of a plurality of energy storage modules in a string segment, or in multiple string segments in a string, or in multiple strings. This may advantageously allow the ESS to continue operation even if one or more energy storage modules have been disconnected or bypassed.

According to one embodiment, for either positive or negative direction of current flow, bypassing the at least one energy storage module includes: controlling operation of the one or more switches of the second half-bridge circuit assembly portion to enable current flow between the first connection terminal and the second connection terminal via the second half-bridge circuit assembly portion; and controlling operation of the one or more switches of the first half-bridge circuit assembly portion to prevent current flow between the energy storage module and the first connection terminal via the first half-bridge circuit assembly portion. Enabling current flow between the first connection terminal and the second connection terminal via the second half-bridge circuit assembly portion may include closing the second switch and/or the third switch. Preventing current flow between the energy storage module and the first connection terminal via the first half-bridge circuit assembly portion may include opening the first switch and/or the fourth switch.

According to one embodiment, for an indefinite direction of a current flow, bypassing the at least one energy storage module includes: bypassing the energy storage module by operating the one or more switches in the first half-bridge circuit assembly portion and the one or more switches in the second half-bridge circuit assembly portion to: allow current flow between the first connection terminal and the second connection terminal via the second half-bridge circuit assembly portion and prevent current flow between the energy storage module and the first connection terminal via the first half-bridge circuit assembly portion; or prevent current flow between the first connection terminal and the second connection terminal via the second half-bridge circuit assembly portion and allow current flow between the energy storage module and the first connection terminal via the first half-bridge circuit assembly portion; or prevent current flow between the first connection terminal and the second connection terminal via the second half-bridge circuit assembly portion and prevent current flow between the energy storage module and the first connection terminal via the first half-bridge circuit assembly portion.

Enabling current flow between the first connection terminal and the second connection terminal via the second half-bridge circuit assembly portion may include closing the second switch and/or the third switch. Preventing current flow between the first connection terminal and the second connection terminal via the second half-bridge circuit assembly portion may include opening the second switch and/or the third switch. Preventing current flow between the energy storage module and the first connection terminal via the first half-bridge circuit assembly portion may include opening the first switch and/or the fourth switch. Enabling current flow between the energy storage module and the first connection terminal via the first half-bridge circuit assembly portion may include closing the first switch and/or the fourth switch.

According to one embodiment, the method further comprises monitoring the ESS to detect a fault affecting at least one string. The method may further include monitoring the ESS to detect a fault of one or more categories. Operation of the bypass circuit may depend on the category of the fault. The ESS may be monitored by means of one or more sensors, such as current sensors, voltage sensors, temperature sensors, or by means of monitoring operation of the converter. A fault may be detected by actively detecting a fault or by monitoring an operation and from a detected deviance of operation, infer a fault has occurred.

According to one embodiment, the method comprises:
i) coordinating operation of the three or more switches to transfer a main voltage stress caused by said detected fault onto one of the three or more switches, and/or
ii) coordinating operation of the three or more switches of at least one bypass circuit to perform gradual charging of at least one energy storage module, and/or
iii) coordinating operation of the three or more switches of at least a first bypass circuit and a second bypass circuit to control energy balance between a first energy storage module and a second energy storage module.

Said three or more switches may include the first switch, the second switch, the third switch, the fourth switch, and any protection switches associated with an energy storage module.

Coordinating operation may include closing and/or opening said switches in an operational sequence. This may include coordinating operation so that said switches are closed and/or opened substantially simultaneously or in rapid succession according to an operational sequence.

According to a fourth aspect, a control unit configured to control operation of an energy storage system, ESS, according is provided. The control unit is configured to, upon detection of a fault affecting a first string, bypass at least one energy storage module in the first string according to the method of the third aspect or any embodiments thereof. The control unit may comprise monitoring means, such as sensors or means for receiving input from operation of the ESS. The control unit may comprise a processing unit adapted for processing information received from said monitoring and generate instructions. The control unit may comprise a control signal generator for generating a control signal to one or more of the switches in the bypass circuit, the protection switches, the converter, etc., to control operation thereof.

A computer program comprising instructions which, when the program is executed by a computer, cause the computer to carry out the method according to the first aspect or any embodiments thereof.

A computer-readable storage medium comprising instructions which, when executed by a computer, cause the computer to carry out the method according to the first aspect or any embodiments thereof.

The invention is defined by the appended independent claims, with embodiments being set forth in the appended dependent claims, in the following description and in the drawings.

### Brief Description of the Drawings

The invention will in the following be described in more detail with reference to the enclosed drawings, wherein:
Figs. 1a-1b, 2a-2b illustrate operation of a bypass circuit in the event of various faults;
Fig. 3 illustrates an ESS according to one embodiment of the invention;
Fig. 4 illustrates a string in terms of its components according to one embodiment of the invention;
Figs. 5-9 illustrate various embodiments of a bypass circuit according to respective embodiments of the invention;
Figs. 10a-10c illustrate an operating principle of a bypass circuit according to one embodiment of the invention for positive current direction;

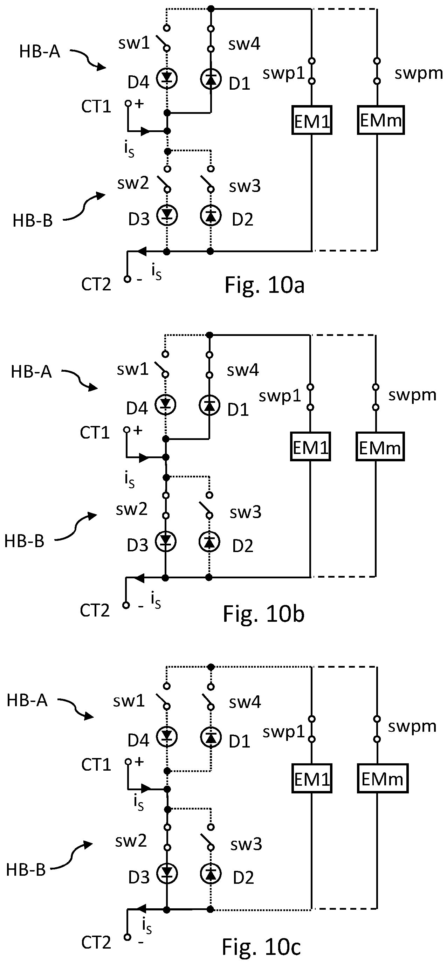

Figs. 10a-10c illustrate an operating principle of a bypass circuit according to one embodiment of the invention;

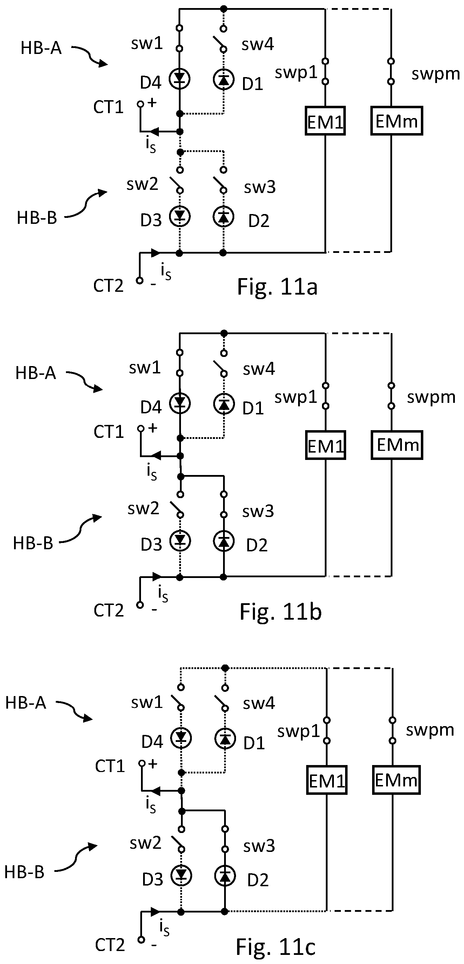

Figs. 11a-11c illustrate an operating principle of a bypass circuit according to one embodiment of the invention for negative current direction;

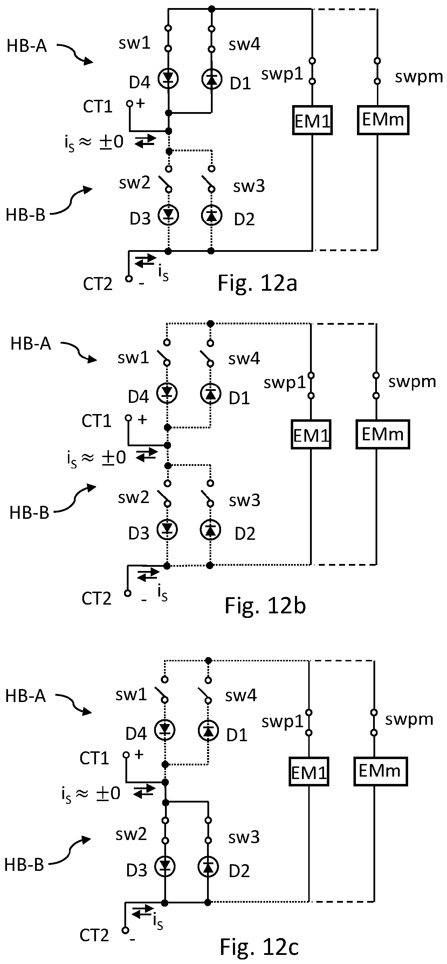

Figs. 12a-12c illustrate an operating principle of a bypass circuit according to one embodiment of the invention for indefinite current direction;

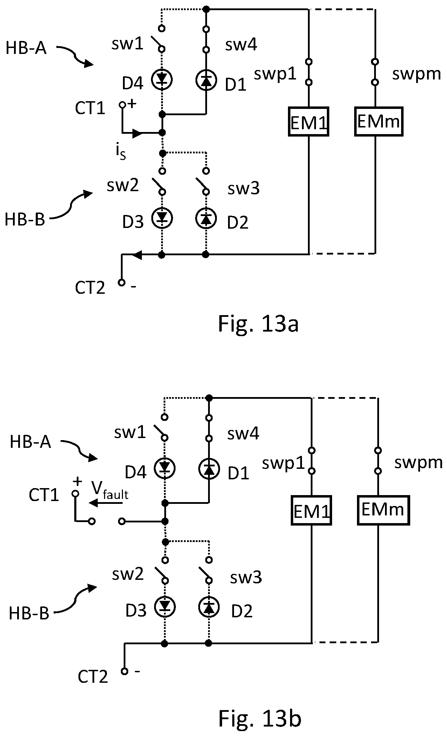

Figs. 13a-13d illustrate an operating principle of a bypass circuit according to one embodiment of the invention for an external open circuit fault;

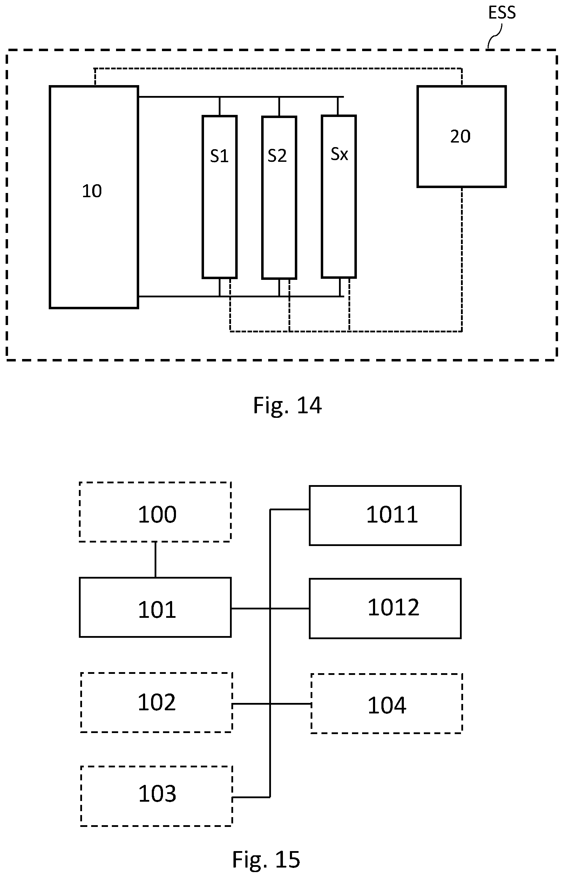

Fig. 14 illustrate an ESS according to one embodiment of the invention, and
Fig. 15 illustrates a method of controlling operation of an ESS according to one embodiment of the invention.

### Description of Embodiments

Hereinafter, the principle and spirit of the present disclosure will be described with reference to the illustrative embodiments. It should be understood that all these embodiments are given merely for the person skilled in the art to better understand and further practice the present disclosure, but not for limiting the scope of the present disclosure. For example, features illustrated or described as part of one embodiment may be used with another embodiment to yield still a further embodiment. In the interest of clarity, not all features of an actual implementation are described in this specification. It will of course be appreciated that in the development of any such actual embodiment, numerous implementation-specific decisions should be made to achieve the developers' specific goals, such as compliance with system-related and business-related constraints, which will vary from one implementation to another. Moreover, it will be appreciated that such a development effort might be complex and time-consuming but would nevertheless be a routine undertaking for those of ordinary skill in the art having the benefit of this disclosure.

The disclosed subject matter will now be described with reference to the attached figures. Various structures, systems and devices are schematically depicted in the drawings for purposes of explanation only and so as to not obscure the description with details that are well known to those skilled in the art. Nevertheless, the attached drawings are included to describe and explain illustrative examples of the disclosed subject matter. The words and phrases used herein should be understood and interpreted to have a meaning consistent with the understanding of those words and phrases by those skilled in the relevant art. No special definition of a term or phrase, i.e., a definition that is different from the ordinary and customary meaning as understood by those skilled in the art, is intended to be implied by consistent usage of the term or phrase herein. To the extent that a term or phrase is intended to have a special meaning, i.e., a meaning other than that understood by skilled artisans, such a special definition will be expressly set forth in the specification in a definitional manner that directly and unequivocally provides the special definition for the term or phrase.

The present disclosure relates to a bypass circuit for an energy storage system, ESS; an ESS comprising such a bypass circuit; a method of controlling operations of an ESS.

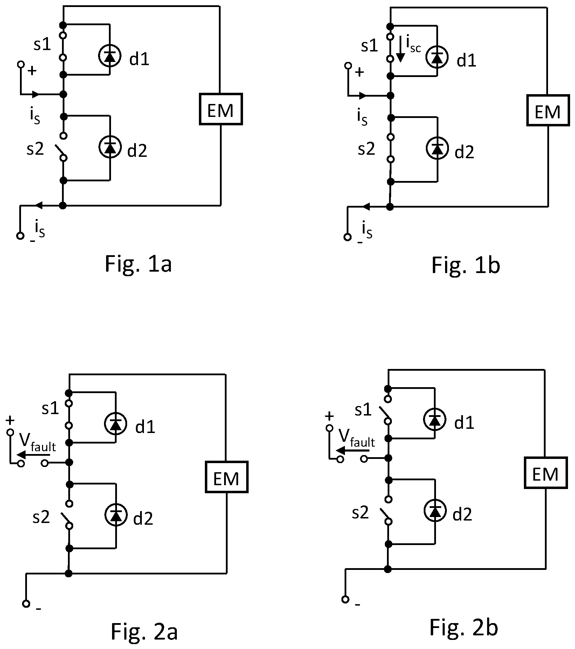

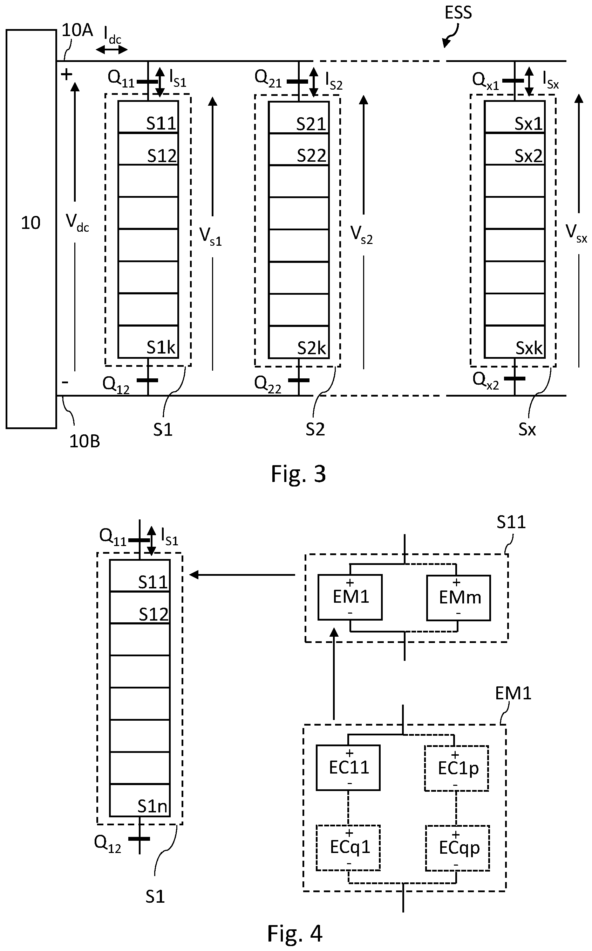

Figs. 1a-1b and figs. 2a-2b illustrate a bypass circuit for an energy storge module EM. In Fig. 1a, the first switch s1 is in a closed state and the second switch s2 is in an open state. Therefore, during use, a positive string current is flows in a circuit direction as indicated in Fig. 1a, from a first connection terminal to a second connection terminal, via the closed first switch s1 and the energy storage module EM. However, in the event of a fault, when closing the second switch s2 to bypass the energy storage module EM, a short-circuit current i_{sc} may flow via the first switch s1 from the energy storage module EM as shown in Fig. 1b. One way of hindering the short-circuit current is to open the first switch s1 before closing the second switch s2. While this may prevent the short-circuit current i_{sc} from flowing, it may instead create an artificial open circuit voltage in the string. Moreover, in the event of an external open circuit fault, as indicated in Fig. 2a, the fault point will experience the voltage stress V_{fault}. Due to the parallel-connected diodes d1 and d2 with switches s1 and s2 respectively, see Fig. 2b, the latter ones are not able to clear the fault when e.g., put in an open state, thereby shifting the voltage stress on themselves. By incorporating additional circuit elements, as indicated in e.g., Figs. 4a to 9, a bypass circuit for an energy storage module EM may be improved in these aspects.

Fig. 3 illustrates a schematic illustration of an energy storage system, ESS, for which a bypass circuit according to the invention may be used. The ESS comprises a converter 10 providing a DC converter voltage Vdc between a first converter connection terminal 10A and a second converter connection terminal 10B. The ESS comprises one or more strings S1, S2, Sx connected between the first converter connection terminal 10A and the second converter connection terminal 10B. Each string comprises at least one energy storage module EM. In Fig. 1, the ESS is illustrated as comprising a first string S1 and a second string S2. The first string S1 and the second string S2 are connected in parallel between the first converter connection terminal 10A and the second converter connection terminal 10B. The ESS may comprise one or more additional strings Sx connected in parallel with the first string S1 and second string S2.

Moreover, the ESS may comprise a first disconnector Q11, Q21, Qx1 located between the first converter connection terminal and a first end of one or more strings S1, S2, Sx. The ESS may comprise a second disconnector Q12, Q22, Qx2 located between the second converter connection terminal and a second end of one or more strings S1, S2, Sx. By a first disconnector and/or a second disconnector, a string may be partially or wholly disconnected from the ESS.

Each string is associated with an open circuit DC voltage VS1, VS2, VSx dependent on the energy stored in energy storage modules in each string. During normal operations, the open circuit DC voltage of a string may substantially match the DC converter voltage when the string is connected to the ESS. Moreover, a converter current I_{dc} may flow in response to the DC converter voltage V_{dc}. In the strings S1, S2, Sx, a string current may then flow. According to one embodiment, the strings S1, S2, Sx are adapted to substantially be of equal design. During normal operations, the respective string currents I_{S1}, I_{S2}, I_{Sx} may be substantially equal in magnitude.

If the number x strings is x > 1, then the x strings may be connected in parallel between the first converter connection terminal 10A and the second converter connection terminal 10B. Moreover, the strings may comprise one or more energy storage modules EM. The one or more energy storage modules EM may be arranged in different string segments S11, S12, etc. At least one string comprises one or more string segments S11, S12, S1n. If the number n string segments in a string is n > 1, then the n string segments may be connected in series. At least one string segment S11 comprises one or more energy storage modules EM1, EMm. If the number m of energy storage modules is m > 1, then the m energy storage modules may be connected in parallel. Two or more energy storage modules in a string segment may be connected in series.

Moreover, an energy storage module may comprise one or more energy storage cells EC11, EC1p, ECn1, ECnp which may be either connected in series or connected in parallel. Fig. 4 shows an example of an example of a first string S1. The first string comprises a first string segment and may comprise n string segments S11, S12, S1n connected in series, wherein n > 1. A first string segment S11 comprises a first energy storage module EM1 and may comprise m energy storage modules EM1, EMm connected in parallel, wherein m > 1. A first energy storage module EM1 comprises a first energy storage cell EC11 and may comprise q energy storage modules EC11, ECq1 connected in series. The first energy storage module EM1 may comprise two or p branches of energy storage cells EC1p, ECqp. One or more of the strings S1, S2, Sx may be adapted in the same way. Although not shown, a string segment may comprise energy storage modules connected in series. Moreover, a string may comprise string segments connected in parallel. As such, one or more strings of the ESS may be adapted in various ways.

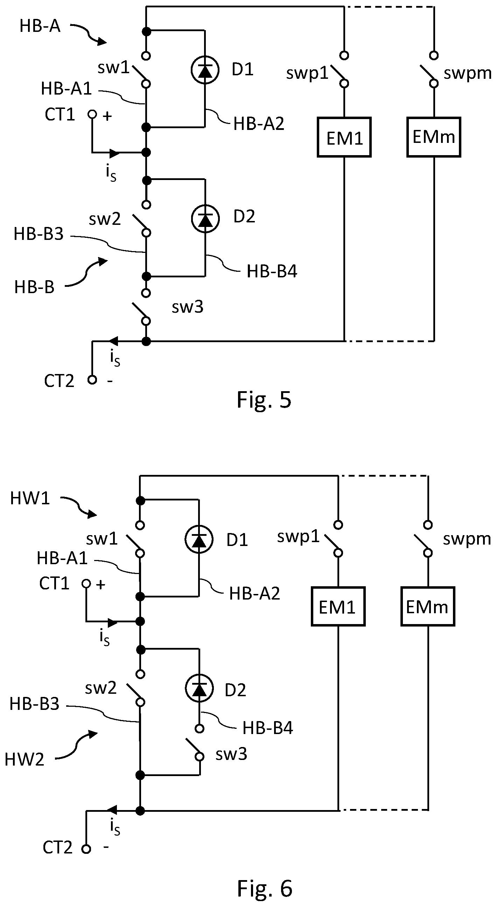

Fig. 5 illustrates a bypass circuit 1 according to one embodiment of the invention. The bypass circuit 1 comprises a half-bridge circuit assembly. The half-bridge circuit assembly comprises a first half-bridge circuit assembly portion HB-A and a second half-bridge circuit assembly portion HB-B. The half-bridge circuit assembly is configured to connect with at least one energy storage module EM1, EMm of said at least one energy storage module EM1, EMm to form a half-bridge circuit with a first connection terminal CT1 between the first half-bridge circuit assembly portion HB-A and the second half-bridge circuit assembly portion HB-B and a second connection terminal CT2 between the second half-bridge circuit assembly portion HB-B and said at least one energy storage module EM1, EMm. As shown in Fig. 5, the at least one energy storage module EM1, EMm may be connected in parallel. The half-bridge circuit assembly may however be adapted to connect with two or more energy storage modules connected in series.

The first half-bridge circuit assembly portion HB-A includes a first branch HB-A1 and a second branch HB-A2. The second half-bridge circuit assembly portion HB-B includes a third branch HB-B3 and a fourth branch HB-B4. The first branch HB-A1 and the second branch HB-A2 are connected in parallel. The third branch HB-B3 and the fourth branch HB-B4 are connected in parallel.

The bypass circuit 1 further comprises a first switch sw1 arranged in the first branch HB-A1. The bypass circuit 1 also comprises a second switch sw2 arranged in the third branch HB-B3. The bypass circuit 1 further comprises a first diode D1 arranged in the second branch HB-A2. The first diode D1 is configured to be forward-biased in a circuit direction from the first connection terminal CT1 to said at least one energy storage module EM1, EMm. The bypass circuit further comprises a second diode D2 arranged in the fourth branch HB-B4. The second diode D2 is configured to be forward-biased in a circuit direction from the second connection terminal CT2 to the first connection terminal CT1. The bypass circuit 1 comprises a third switch sw3 arranged in series with both the third branch HB-B3 and the fourth branch HB-B4. By the arrangement of the third switch sw3 in this manner, a current flow path between the first connection terminal CT1 and the second connection terminal CT2 via the second half-bridge circuit assembly portion HB-B may be disconnected. Moreover, a voltage stress V_{fault} following an external open circuit fault may advantageously be transferred to the third switch sw3.

As shown in Fig. 5, the bypass circuit may further comprise one or more protection switches swp1, swpm for individually disconnecting a respective energy storage module. Alternatively, the bypass circuit 1 may connect with energy storage modules provided with such protection switches swp1, swpn.

Fig. 6 shows an alternative embodiment wherein the third switch sw3 is arranged in the fourth branch HB-B4. In this embodiment, the third switch sw3 is connected in series with the second diode D2. By the arrangement of the third switch sw3 in this manner, a current flow path between the first connection terminal CT1 and the second connection terminal CT2 via the second half-bridge circuit assembly portion HB-B may be disconnected along the fourth branch HB-B4. Moreover, a voltage stress V_{fault} following an external open circuit fault may advantageously be transferred to the third switch sw3.

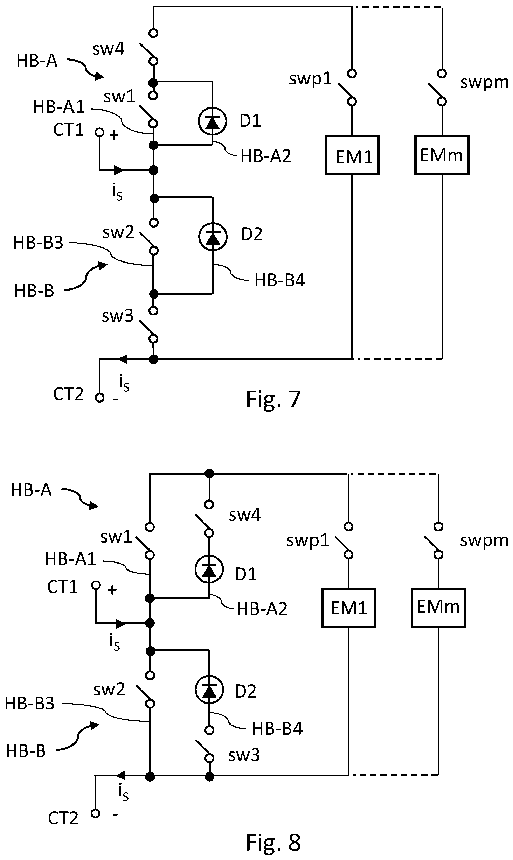

Fig. 7 shows an embodiment wherein the bypass circuit comprises a fourth switch sw4 arranged in series with both the first branch HB-A1 and the second branch HB-A2. As an alternative to the embodiment depicted in Fig. 7, the third switch sw3 may be arranged in the fourth branch HB-B4 instead of being arranged in series with the third branch HB-B3 and the fourth branch HB-B4. By the fourth switch sw4 arranged in this manner, a current flow path between the first connection terminal CT1 and the one or more energy storage modules via the first half-bridge circuit assembly portion HB-A may be disconnected. Moreover, a voltage stress V_{fault} following an external open circuit fault may advantageously be transferred to the fourth switch sw4 rather than the third switch sw3, if preferable.

In Fig. 8, a further embodiment is illustrated. The bypass circuit comprises a fourth switch sw4 arranged in the second branch HB-A2. In this embodiment, the fourth switch sw4 is connected in series with the first diode D1. As an alternative to the embodiment depicted in Fig. 8, the third switch sw3 may be arranged in series with the third branch HB-B3 and the fourth branch HB-B4 instead of being arranged in the fourth branch HB-B4. By the fourth switch sw4 arranged in this manner, a current flow path between the first connection terminal CT1 and the one or more energy storage modules via the second branch of the first half-bridge circuit assembly portion HB-A may be disconnected. Moreover, a voltage stress V_{fault} following an external open circuit fault may advantageously be transferred to the fourth switch sw4 rather than the third switch sw3, if preferable.

In one embodiment, the bypass circuit 1 further comprises a third diode D3 arranged in the third branch HB-B3. The third diode D3 is configured to be forward-biased from said first connection terminal CT1 to the second connection terminal CT2. The second switch sw2 and the third diode D3 are connected in series. The third switch sw3 and the second diode D2 are connected in series.

In one further embodiment, the bypass circuit comprises a fourth switch sw4 arranged in the second branch HB-A2 and a fourth diode D4 arranged in the first branch. The fourth diode D4 is configured to be forward-biased in a circuit direction from said one energy storage module EM1, EMm to the first connection terminal CT1. The first switch sw1 and the fourth diode D4 are connected in series. The fourth switch sw4 and the first diode D1 are connected in series.

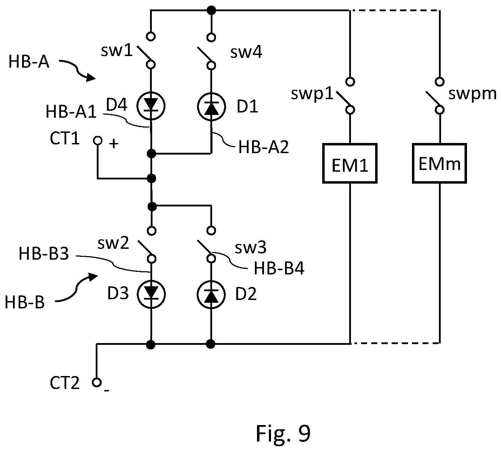

Fig. 9 shows one embodiment combining some of the aforementioned embodiments. In this embodiment, the bypass circuit 1 further comprises a third diode D3 arranged in the third branch HB-B3. The third diode D3 is configured to be forward-biased from said first connection terminal CT1 to the second connection terminal CT2. The second switch sw2 and the third diode D3 are connected in series. The third switch sw3 and the second diode D2 are connected in series. Moreover, the bypass circuit comprises a fourth switch sw4 arranged in the second branch HB-A2 and a fourth diode D4 arranged in the first branch. The fourth diode D4 is configured to be forward-biased in a circuit direction from said one energy storage module EM1, EMm to the first connection terminal CT1. The first switch sw1 and the fourth diode D4 are connected in series. The fourth switch sw4 and the first diode D1 are connected in series. As exemplified, the bypass circuit 1 may further comprise one or more protection switches swp1, swpn for individually disconnecting a respective energy storage module. Alternatively, the bypass circuit 1 may connect with energy storage modules provided with such protection switches swp1, swpn.

One or more of the first, second, third switches sw1, sw2, sw3 or any other switch in the bypass circuit may be a resettable switch. By other switch, it may be meant the fourth switch or any of protection switches, if included. Resettable switches may for example include any of: a magnetic contactor, a mechanically operated switch, power electronic devices (e.g., IGBT, MOSFET, etc.), solid state switches, etc. Resettable switches may include other switches as well.

Alternatively, one or more of the first, second, third switches sw1, sw2, sw3 or any other switch in the bypass circuit may be a non-resettable switch. By other switch, it may be meant the fourth switch or any of protection switches, if included. Non-resettable switches may include any of: pyro switch, a fuse, etc. Non-resettable switches may include other switches as well.

The switches in the bypass circuit and/or the protection switches may be selected from a combination of resettable switches and non-resettable switches.

One or more of the first diode D1 and the second diode D2, or any other diode in the bypass circuit, is a single diode or a multi-diode stack. By other diode in the bypass circuit, it may include the third diode D3 and the fourth diode D4.

Short-circuit tolerance of the one or more switches in the bypass circuit and peak forward surge current of the one or more diodes may advantageously be selected to be rated for maximum short-circuit current composed of a sum of individual energy module short-circuit currents. One or more switches and one or more diodes may however deviate from this depending on the overall design of the bypass circuit and whether or not said one or more switches and said one or more diodes is arranged to be susceptible to short-circuit currents.

Advantageously, the bypass circuit may be adapted to be at least partially or wholly integrated in with one or more energy storage module EM1, EMm. As an example, the bypass circuit may be adapted to be at least partially or wholly integrated with one or more energy storage modules EM1, EMm in a string segment.

As an alternative, the bypass circuit may comprise a first half-bridge circuit assembly and a second half-bridge circuit assembly. The first half-bridge circuit assembly and the second half-bridge circuit assembly may be adapted to form a full-bridge circuit assembly.

The bypass circuit may advantageously comprise a plurality of half-bridge circuit assemblies or full-bridge circuit assemblies, wherein each half-bridge circuit assembly or full-bridge circuit assembly is adapted to connect to one energy storage module or a plurality of energy storage modules.

Fig. 10a illustrates the bypass circuit 1 according to one embodiment during normal operations for a positive current. The fourth switch sw4 is in a closed state. Moreover, the optional protection switches are also in closed states. All other switches sw1, sw2, sw3 are in open states. Therefore, a current may then flow from the first connection terminal CT1 to the second connection terminal CT2 via the closed fourth switch sw4 and the at least one energy storage module EM1, EMm.

However, upon detecting a fault affecting a string, as shown in Fig. 10b, the bypass circuit 1 closes the second switch sw2 so that current can flow from the first connection terminal CT1 and the second connection terminal CT2 via the second switch sw2 and the third diode D3, thereby bypassing the at least one energy storage module EM1, EMm. Upon closing the second switch sw2, the first diode D1 prevents an artificial short-circuit current flowing from the one or more energy storage modules toward the second connection terminal CT2 through the still closed fourth switch sw4. When the current flows from the first connection terminal CT1 to the second connection terminal CT2 via the second switch sw2 and the third diode D3, the fourth switch sw4 is opened as shown in Fig. 10c.

Hence, this bypass circuit may advantageously prevent an artificial short-circuit current which may occur for bypass circuits such as the one illustrated in Figs. 1a-2b.

Fig. 11a illustrates the bypass circuit 1 according to one embodiment during normal operations for a negative current. The first switch sw1 is in a closed state. Moreover, the optional protection switches are also in closed states. All other switches sw2, sw3, sw4 are in open states. Therefore, a current may then flow from the second connection terminal CT2 to the first connection terminal CT1 via the closed first switch sw1 and the at least one energy storage module EM1, EMm.

However, upon detecting a fault affecting a string, as shown in Fig. 11b, the bypass circuit 1 closes the third switch sw3 so that current can flow from the second connection terminal CT2 and the first connection terminal CT1 via the third switch sw3 and the second diode D2, thereby bypassing the at least one energy storage module EM1, EMm. The fourth diode D4 prevents an artificial short-circuit current from flowing in the still closed first switch sw1. When the current flows from the second connection terminal CT2 to the first connection terminal CT1 via the third switch sw3 and the second diode D2, the first switch sw1 is opened as shown in Fig. 11c.

In some cases, the current may be indefinite in terms of direction and may fluctuate. This may for instance occur when the current has a very small magnitude. For these cases, the bypass circuit can be used as follows. The bypass circuit may be operated so that the first switch sw1 and the fourth switch sw4 are in a closed state while the second switch sw2 and the third switch sw3 are in an open state, as shown in Fig. 12a. The first switch sw1 and the fourth switch sw4 thus provide current flow paths depending on whether the current is a positive current or a negative current. Alternatively, the bypass circuit may be operated so that the first switch sw1 and the fourth switch sw4 is in an open state while the second switch sw2 and the third switch sw3 are in an open state, as shown in Fig. 12b. Alternatively, the bypass circuit may be operated so that the first switch sw1 and the fourth switch sw4 are in an open state while the second switch sw2 and the third switch sw3 are in a closed state, as shown in Fig. 12c. The second switch sw2 and the third switch sw3 thus provide current flow paths depending on whether the current is a positive current or a negative current.

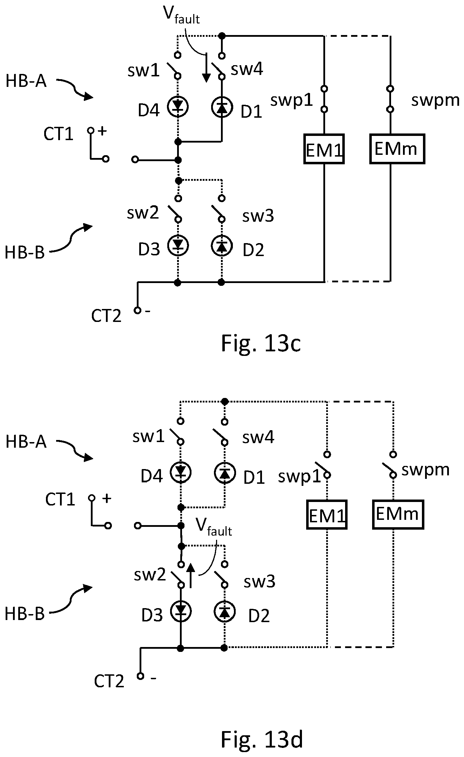

Figs. 13a-d show a sequence of operation of the switches in the event of a fault. Moreover, Fig. 13a illustrates a bypass circuit according to one embodiment of the invention. In certain situations, a fault may cause a main voltage stress V_{fault} between the bypass circuit and a first connection terminal CT1. The bypass circuit may then be operated so that operation of the three or more switches sw1, sw2, sw3, sw4 is coordinated to transfer the main voltage stress V_{fault} onto one of the three or more switches sw1, sw2, sw3, sw4. In Fig. 13c, the fourth switch sw4 is opened and the main voltage stress V_{fault} is transferred over the fourth switch sw4. One or more protection switches swp1, swpm are opened, thereby transferring the main voltage stress V_{fault} to the second switch sw2 as indicated in Fig. 13d. How the one or more switches sw1, sw2, sw3, sw4 are coordinated in operation may depend on the current direction. Figs. 13a-d show the case for positive current. It may be understood that for a negative current, the V_{fault} may be transferred using the first switch sw1 and the third switch sw3.

Moreover, the bypass circuit may be used for coordinated operation of the three or more switches sw1, sw2, sw3, sw4 of at least one bypass circuit to perform gradual charging of at least on energy storage module.

In addition, the bypass circuit may be used for coordinated operation of the three or more switches sw1, sw2, sw3, sw4 of at least a first bypass circuit and a second bypass circuit to control energy balance between a first energy storage module and a second energy storage module

According to one other aspect, an energy storage system ESS is provided which comprises a converter 10 providing a DC converter voltage Vdc between a first converter connection terminal 10A and a second converter connection terminal 10B. The ESS comprises one or more strings S1, S2, Sx connected between the first converter connection terminal 10A and the second converter connection terminal 10B. Each string S1, S2, Sx comprises at least one energy storage module EM1, EMm. The ESS further comprises a bypass circuit according to any one embodiment disclosed herein. The bypass circuit is connected to at least one energy storage module EM1 of said at least one energy storage module EM1, EMm. The ESS is schematically illustrated in Fig. 14 comprising an optional control unit 20 for controlling operation of the one or more bypass circuits associated with energy storage modules in the respective strings S1, S2, Sx. The control unit may comprise means for monitoring one or more strings, one or more energy storage modules, or the converter, to detect a fault affecting one or more strings, or one or more energy storage modules in said string or strings. The control unit may be adapted to comprise one or more sensors, and/or be adapted to receive input from one or more sensors. Said sensors may include current sensors, voltage sensors, temperature sensor, or other sensors etc. The control unit may comprise a processing unit for processing received sensor information and/or received monitoring data from said monitoring. The processing unit may then process this and then generate a corresponding instruction to be taken. The control unit may comprise a control signal generator for generating a control signal based on said instruction and correspondingly control a bypass circuit associated with one or more energy storage modules affected by a fault.

Fig. 15 relates to a method of controlling operations of an energy storage system ESS. The method comprises: upon detection of a fault affecting a first string S1, S2, Sx, controlling 101 operation of at least one bypass circuit 1 to bypass 1011 or disconnect 1012 at least one energy storage module EM1, EMm. The method may further comprise monitoring 100 the ESS to detect a fault affecting at least one string S1, S2, Sx.

The method may be adapted so that, for either positive or negative direction of current flow, said bypassing 1011 the at least one energy storage module includes: controlling operation of the one or more switches sw2, sw3 of the second half-bridge circuit assembly portion HB-B to enable current flow between the first connection terminal CT1 and the second connection terminal CT2 via the second half-bridge circuit assembly portion HB-B, and controlling operation of the one or more switches sw1, sw4 of the first half-bridge circuit assembly portion HB-A to prevent current flow from the energy storage module EM1, EMm to the first connection terminal CT1 via the first half-bridge circuit assembly portion HB-A.

The method may be adapted so that for an indefinite direction of a current flow, bypassing 1011 the at least one energy storage module EM1, EMm includes: bypassing the energy storage module EM1, EMm by operating the one or more switches sw1, sw4 in the first half-bridge circuit assembly portion HB-A and the one or more switches sw2, sw3 in the second half-bridge circuit assembly portion HB-B to do one of the following. In a first alternative, said operating may allow current flow between the first connection terminal CT1 and the second connection terminal CT2 via the second half-bridge circuit assembly portion HB-B and prevent current flow from the energy storage module to the first connection terminal CT1 via the first half-bridge circuit assembly portion HB-A. Alternatively, said operating may be to prevent current flow between the first connection terminal CT1 and the second connection terminal CT2 via the second half-bridge circuit assembly portion HB-B and allow current flow from the energy storage module to the first connection terminal CT1 via the first half-bridge circuit assembly portion HB-A. Alternatively, said operating may prevent current flow between the first connection terminal CT1 and the second connection terminal CT2 via the second half-bridge circuit assembly portion HB-B and prevent current flow from the energy storage module EM1, EMm to the first connection terminal CT1 via the first half-bridge circuit assembly portion HB-A.

The method may be adapted to comprise coordinating 102 operation of the three or more switches sw1, sw2, sw3, sw4 to transfer a main voltage stress V_{fault} caused by said detected fault onto one of the three or more switches sw1, sw2, sw3, sw4. The method may be adapted to comprise coordinating 103 operation of the three or more switches sw1, sw2, sw3, sw4 of at least one bypass circuit to perform gradual charging of at least one energy storage module. The method may be adapted to comprise coordinating 104 operation of the three or more switches sw1, sw2, sw3, sw4 of at least a first bypass circuit and a second bypass circuit to control energy balance between a first energy storage module and a second energy storage module.

While the foregoing is directed to embodiments of the disclosure, other and further embodiments may be devised without parting from the inventive concept discussed herein. The scope of the invention is however determined by the claims.

## Claims

1. Bypass circuit (1) for an energy storage system, ESS, said ESS comprising:
a converter (10) providing a DC converter voltage (V_{dc}) between a first converter connection terminal (10A) and a second converter connection terminal (10B), and
one or more strings (S1, S2, Sx) connected between the first converter connection terminal (10A) and the second converter connection terminal (10B), each string comprising at least one energy storage module (EM1, EMm),
the bypass circuit (1) comprising:
a half-bridge circuit assembly comprising a first half-bridge circuit assembly portion (HB-A) and a second half-bridge circuit assembly portion (HB-B), the half-bridge circuit assembly configured to connect with one energy storage module (EM1, EMm) of said at least one energy storage module (EM1, EMm) to form a half-bridge circuit with a first connection terminal (CT1) between the first half-bridge circuit assembly portion (HB-A) and the second half-bridge circuit assembly portion (HB-B) and a second connection terminal (CT2) between the second half-bridge circuit assembly portion (HB-B) and said one energy storage module (EM1, EMm),
wherein the first half-bridge circuit assembly portion (HB-A) includes a first branch (HB-A1) and a second branch (HB-A2), and the second half-bridge circuit assembly portion (HB-B) includes a third branch (HB-B3) and a fourth branch (HB-B4),
the bypass circuit (1) further comprising:
a first switch (sw1) arranged in the first branch (HB-A1),
a second switch (sw2) arranged in the third branch (HB-B3),
a first diode (D1) arranged in the second branch (HB-A2) and configured to be forward-biased in a circuit direction from the first connection terminal (CT1) to said one energy storage module (EM1, EMm),
a second diode (D2) arranged in the fourth branch (HB-B4) and configured to be forward-biased in a circuit direction from the second connection terminal (CT2) to the first connection terminal (CT1),
a third switch (sw3) arranged in the fourth branch (HB-B4) or arranged in series with both the third and fourth branches (HB-B3, HB-B4).

2. Bypass circuit (1) according to claim 1, further comprising a fourth switch (sw4) arranged in the second branch (HB-A2) or arranged in series with both the first branch (HB-A1) and second branches (HB-A2).

3. Bypass circuit (1) according to any preceding claims, further comprising a third diode (D3) arranged in the third branch (HB-B3) and configured to be forward-biased from said first connection terminal (CT1) to the second connection terminal (CT2), wherein the second switch (sw2) and the third diode (D3) are connected in series and the third switch (sw3) and the second diode (D2) are connected in series.

4. Bypass circuit (1) according to claim 1, further comprising a fourth switch (sw4) arranged in the second branch (HB-A2) and a fourth diode (D4) arranged in the first branch (HB-A1) and configured to be forward-biased in a circuit direction from said one energy storage module (EM1, EMm) to the first connection terminal (CT1), wherein the first switch (sw1) and the fourth diode (D4) are connected in series and the fourth switch (sw4) and the first diode (D1) are connected in series.

5. Bypass circuit (1) according to any preceding claims, further comprising a first protection switch (swp1) for individually disconnecting a first energy storage module (EM1), and optionally at least a second protection switch (swpn) for individually disconnecting each of an at least second energy storage module (EMn).

6. Bypass circuit (1) according to any preceding claims, wherein one or more of the first, second, third switches (sw1, sw2, sw3) or any other switch in the bypass circuit is a resettable switch or a non-resettable switch.

7. Bypass circuit (1) according to any preceding claims, wherein one or more of the first, second, third diode (D1, D2) or any other diode in the bypass circuit is a single diode or a multi-diode stack.

8. Bypass circuit (1) according to any preceding claims, adapted to be at least partially or wholly integrated with an energy storage module (EM1, EMm).

9. Bypass circuit (1) according to any preceding claims, comprising a first half-bridge circuit assembly and a second half-bridge circuit assembly which together form a full-bridge circuit assembly.

10. Energy storage system, ESS, comprising:
a converter (10) providing a DC converter voltage (V_{dc}) between a first converter connection terminal (10A) and a second converter connection terminal (10B);
one or more strings (S1, S2, Sx) connected between the first converter connection terminal (10A) and the second converter connection terminal (10B), each string comprising at least one energy storage module (EM1, EMm),
a bypass circuit according to any of the preceding claims connected to at least one of said at least one energy storage module.

11. Method of controlling operation of an energy storage system, ESS, according to claim 10, the method comprising:
upon detection of a fault affecting a first string (s1, s2, sx), controlling (101) operation of at least one bypass circuit (1) to bypass (1011) or disconnect (1012) at least one energy storage module.

12. Method according to claim 11, wherein for either positive or negative direction of current flow, bypassing (1011) the at least one energy storage module includes:
controlling operation of the one or more switches (sw2, sw3) of the second half-bridge circuit assembly portion (HB-B) to enable current flow between the first connection terminal (CT1) and the second connection terminal (CT2) via the second half-bridge circuit assembly portion (HB-B), and
controlling operation of the one or more switches (sw1, sw4) of the first half-bridge circuit assembly portion (HB-A) to prevent current flow between the energy storage module (EM1, EMm) and the first connection terminal (CT1) via the first half-bridge circuit assembly portion (HB-A).

13. Method according to any of claims 11-12, wherein for an indefinite direction of a current flow, bypassing (1011) the at least one energy storage module (EM1, EMm) includes:
bypassing the energy storage module (EM1, EMm) by operating the one or more switches (sw1, sw4) in the first half-bridge circuit assembly portion (HB-A) and the one or more switches (sw2, sw3) in the second half-bridge circuit assembly portion (HB-B) to
allow current flow between the first connection terminal (CT1) and the second connection terminal (CT2) via the second half-bridge circuit assembly portion (HB-B) and prevent current flow between the energy storage module and the first connection terminal (CT1) via the first half-bridge circuit assembly portion (HB-A), or
prevent current flow between the first connection terminal (CT1) and the second connection terminal (CT2) via the second half-bridge circuit assembly portion (HB-B) and allow current flow between the energy storage module and the first connection terminal (CT1) via the first half-bridge circuit assembly portion (HB-A), or
prevent current flow between the first connection terminal (CT1) and the second connection terminal (CT2) via the second half-bridge circuit assembly portion (HB-B) and prevent current flow between the energy storage module (EM1, EMm) and the first connection terminal (CT1) via the first half-bridge circuit assembly portion (HB-A).

14. Method according to any of claims 11-13, further comprising:
coordinating (102) operation of the three or more switches (sw1, sw2, sw3, sw4) to transfer a main voltage stress (V_{fault}) caused by said detected fault onto one of the three or more switches (sw1, sw2, sw3, sw4), and/or
coordinating (103) operation of the three or more switches (sw1, sw2, sw3, sw4) of at least one bypass circuit to perform gradual charging of at least one energy storage module, and/or
coordinating (104) operation of the three or more switches (sw1, sw2, sw3, sw4) of at least a first bypass circuit and a second bypass circuit to control energy balance between a first energy storage module and a second energy storage module.

15. A control unit configured to control operation of an energy storage system, ESS, according to claim 10, and configured to, upon detection of a fault affecting a first string, bypass at least one energy storage module in the first string according to the method according to any of claims 11-14.
